# EUROPEAN PATENT APPLICATION

(11) **EP 4 649 814 A1**
(43) Date of publication of application: **19.11.2025**
(21) Application number: 25175466.9
(22) Date of filing: 09.05.2025
(51) Int. Cl.: A01D 46/26

(54) **BEATING APPARATUS, PARTICULARLY FOR BEATING OLIVES AND THE LIKE**

(30) Priority: 13.05.2024 IT 202400010684
(71) Applicant: Zanon S.R.L., 35011 Campodarsego PD (IT)
(72) Inventor: ZANON, Franco, 35011 CAMPODARSEGO PD (IT)
(74) Representative: Modiano, Micaela Nadia

(57) **Abstract**

A beating apparatus (10), particularly for beating olives and the like, which comprises a box-like body (11) provided, at an active portion (12), with an elongated handle (13);
and a kinematic chain (14) inside the box-like body (11) for transmitting the rotary motion of motor means (15) to at least one oscillating element (16a, 16b) provided with beating rods (17);
the kinematic chain (14) comprises at least one linkage element (20a, 20b) articulated at one end to the at least one oscillating element (16a, 16b) and at the other end to a crank element (18);
the crank element (18) is kinematically connected to the motor means (15) by means of a bevel gear pair (19).

## Description

The present invention relates to a beating apparatus, particularly for beating olives and the like.

In agriculture, beating is a longstanding traditional operation that causes some kinds of fruit such as, for example, olives, walnuts and/or chestnuts to fall from trees.

It consists of shaking, and optionally striking, the branches of the trees with long poles, in such a manner as to make the now-ripe product fall to the ground.

A more modern technique, and one that is less harmful than manual beating, which can disadvantageously cause damage to the plants, consists of using beaters, i.e. electric (or pneumatic) tools provided with extendable rods which cause the fruit to fall into collection nets by means of the rapid vibration of mutually opposite combs, which are inserted between the branches.

Nowadays, various types of beaters are known; generally, conventional devices comprise a pair of comb-shaped oscillating elements at the end of a box-like body associated with an elongated handle.

The oscillation of these oscillating elements, each one pivoted to the box-like body, is generated symmetrically by the actuation of motor means, usually and preferably an electric motor, which transmits its rotary motion to the oscillating elements by means of an internal kinematic chain.

Although much appreciated nowadays, such conventional devices present some aspects that show room for improvement.

In fact, conventional devices have a kinematic chain constituted by a plurality of gear wheels and transmission elements.

Providing and assembling all the components is technologically burdensome, both because they require many materials to be used, and because the geometric shape and the relative position of the various components must be designed and implemented precisely, in order for the motion to be correctly transmitted.

Furthermore, the presence of many elements that are mutually kinematically connected can cause increased wear of the kinematic mechanism overall compared to an instrument that is structurally simpler and more compact.

The aim of the present invention is to provide a beating apparatus, particularly for beating olives and the like, that is capable of improving the known art in one or more of the abovementioned aspects.

Within this aim, an object of the invention is to provide a beating apparatus, particularly for beating olives and the like, that in terms of construction is simpler than similar, conventional beating apparatuses.

Another object of the invention is to provide an apparatus that requires a smaller number of components to be used and which as a consequence weighs less.

A further object of the present invention is to overcome the drawbacks of the background art in a manner that is alternative to any existing solutions.

Another object of the invention is to provide a beating apparatus that is highly reliable, easy to implement and at low cost.

This aim and these and other objects which will become more apparent hereinafter are achieved by a beating apparatus, particularly for beating olives and the like, comprising a box-like body provided, at an active portion, with an elongated handle, said apparatus comprising a kinematic chain inside said box-like body for transmitting the rotary motion of motor means to at least one oscillating element provided with beating rods, said kinematic chain comprising at least one linkage element articulated at one end to said at least one oscillating element and at the other end to a crank element,
characterized in that said crank element is kinematically connected to said motor means by means of a bevel gear pair.

Further characteristics and advantages of the invention will become more apparent from the detailed description that follows of a preferred, but not exclusive, embodiment of the beating apparatus, which is illustrated for the purposes of non-limiting example in the accompanying drawings wherein:

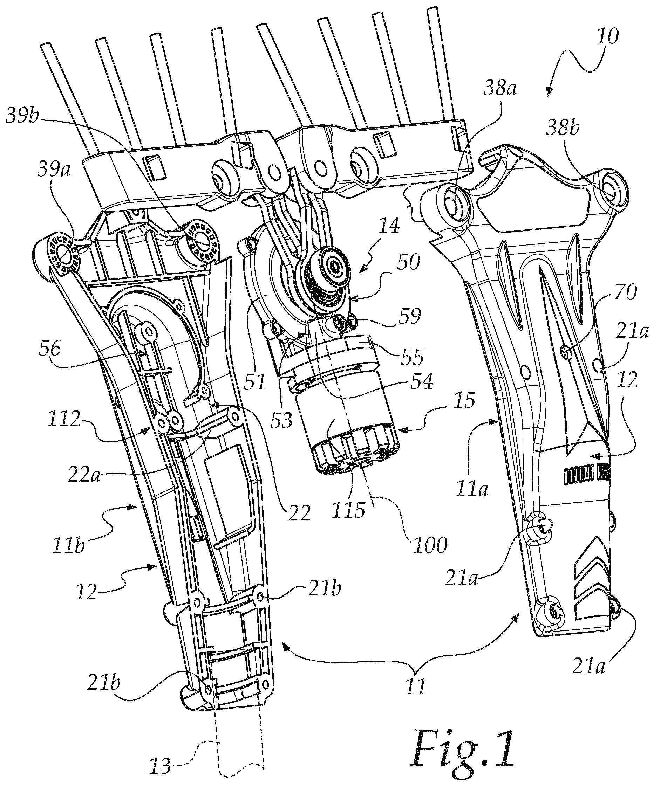

- Figure 1 is a partially exploded perspective view of the beating apparatus according to the invention;

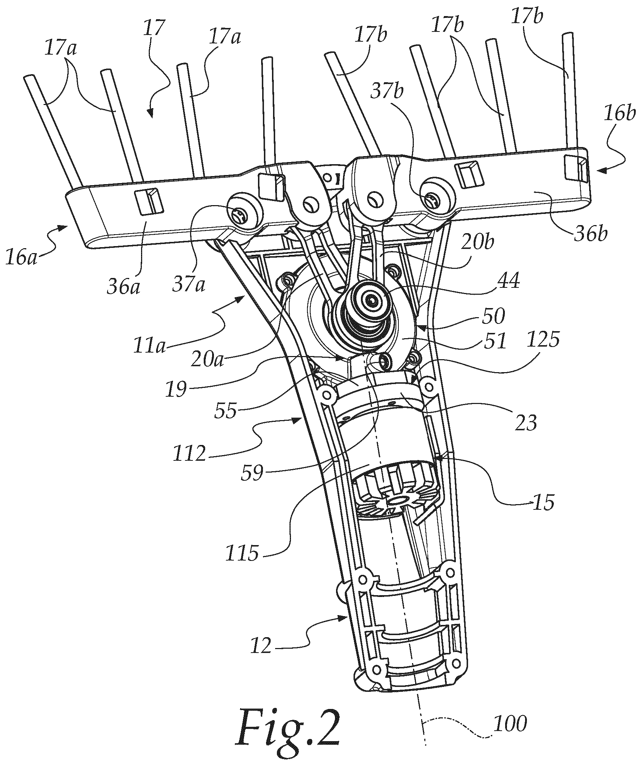

- Figure 2 is a perspective view of a first part of the beating apparatus shown in the exploded view in Figure 1;
- Figure 3 is a perspective view of a second part of the beating apparatus shown in the previous figures;
- Figure 4 is an orthogonal side elevation view of the second part of the beating apparatus shown in Figure 3;

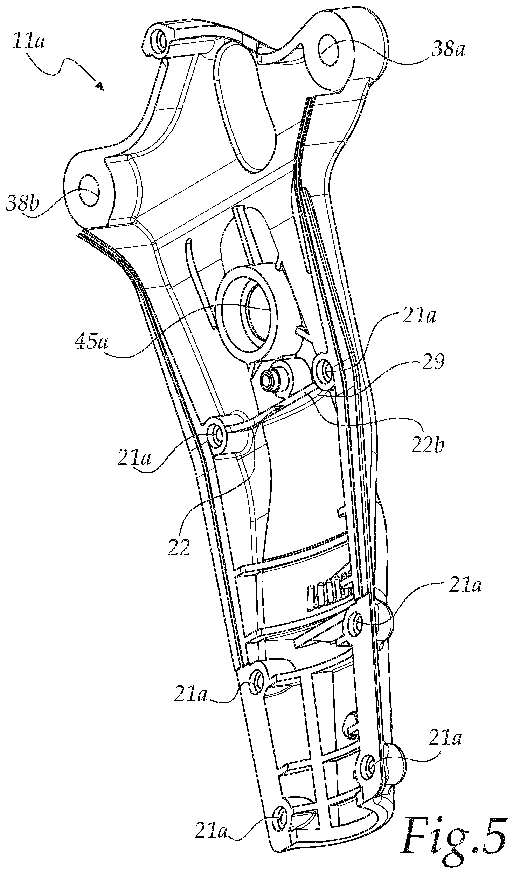

- Figure 5 is a perspective view of a third part of the beating apparatus shown in Figure 1;

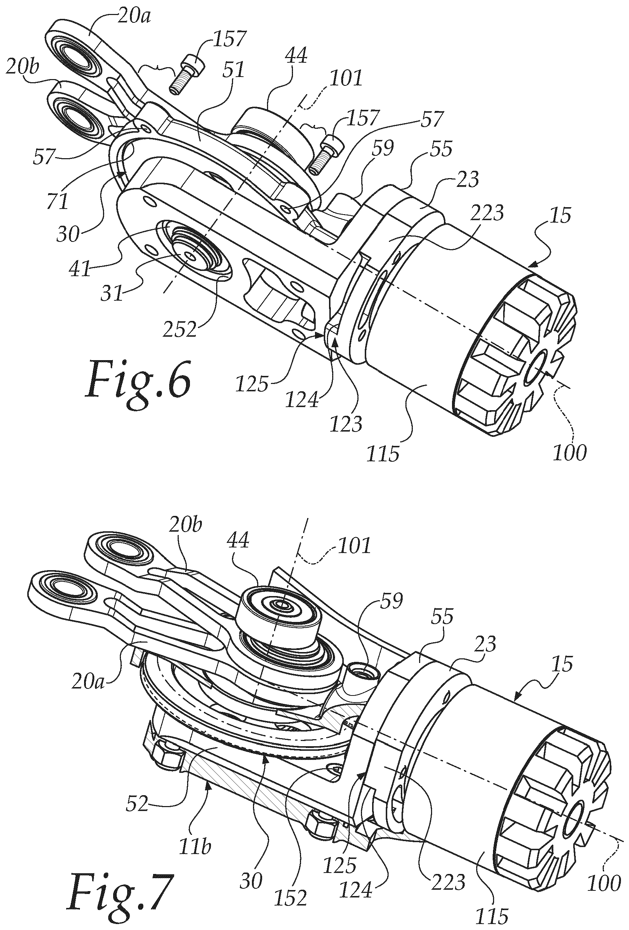

- Figure 6 is a perspective view from below of a fourth part of the beating apparatus shown in Figure 1;
- Figure 7 is a partially cutaway perspective view of the fourth part shown in Figure 6;

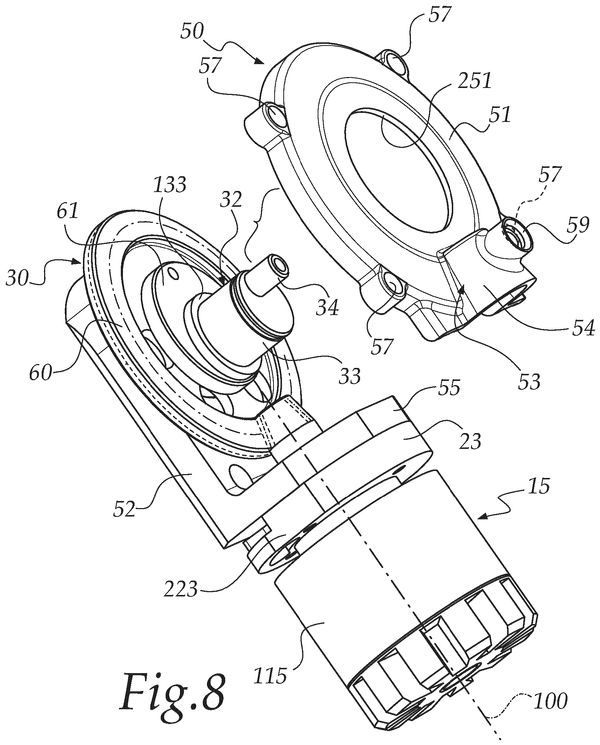

- Figure 8 is a partially exploded perspective view of the fourth part shown in Figures 6 and 7, from which some components have been omitted in order to aid comprehension.

With reference to the figures, a beating apparatus, particularly for beating olives and the like, is generally designated by the reference numeral 10 and comprises a box-like body 11 provided, at an active portion 12 , with an elongated handle 13.

The apparatus 10 comprises a kinematic chain 14 inside the box-like body 11 for transmitting the rotary motion of motor means 15 to at least one oscillating element 16a and/or 16b provided with beating rods 17.

The kinematic chain 14 comprises at least one linkage element 20a and/or 20b, articulated at one end to such at least one oscillating element 16a and/or 16b and at the other end to a crank element 18.

According to the invention, the crank element 18 is kinematically connected to the motor means 15 by means of a bevel gear pair 19.

The apparatus 10 further comprises a supporting body 50 which encloses, at least partially, the crank element 18 and/or the motor means 15.

The motor means 15 comprise advantageously an electric motor 115, preferably brushless.

Advantageously, the box-like body 11 comprises two half-shells 11a and 11b, respectively a first half-shell 11a and a second half-shell 11b, which can be mutually associated detachably by virtue of connecting means (not shown in the figures) in such a manner that the box-like body 11 can be opened and access permitted to the kinematic chain 14, to the motor means 15 and to the oscillating elements 16a and 16b, for example for their maintenance and/or replacement.

The connecting means are conveniently and preferably screw means, adapted to pass through a plurality of first through holes 21a, provided on the first half-shell 11a, designed to be coupled to a corresponding plurality of first dead holes 21b on the second half-shell 11b of the box-like body 11.

The half-shells 11a and 11b have an elongated shape along longitudinal axes that are substantially parallel to each other and to a first axis of rotation 100 of the electric motor 115.

Advantageously, the apparatus 10 comprises two oscillating elements 16a and 16b, respectively, a first oscillating element 16a which is articulated to a first linkage element 20a and a second oscillating element 16b which is articulated to a second linkage element 20b; the linkage elements 20a and 20b are moreover articulated to a common crank element 18.

Conveniently, the first half-shell 11a and the second half-shell 11b are geometrically shaped to provide a shape mating with the motor means 15 and with the supporting body 50.

In more detail, the box-like body 11 has a first seat 22, defined by a receptacle 22a, defined on the second half-shell 11b, and by a recess 22b, defined on an internal element 29 of the first half-shell 11a, which is adapted to face the supporting body 50.

Conveniently, furthermore, the motor means 15, and specifically the electric motor 115, have an annular protrusion 23 at a first end portion 215, which is geometrically associated with the first seat 22 provided in the box-like body 11.

The electric motor 115, in fact, has a body which substantially defines a first part 24 and a second part 25, which is contiguous to the first part 24 and radially narrowed with respect to it; the second part 25 is defined at the first end portion 215 of the electric motor 115.

The annular protrusion 23 has an outside diameter that is dimensionally comparable and substantially equal to the first part 24; it furthermore has a transverse recess 123, which defines a step 124 on a front face 125 thereof.

The annular protrusion 23 also has a flat surface portion 223.

The recess 22b on the internal element 29 reproduces, in negative form and at least partially, the geometric shape of the supporting body 50.

The receptacle 22a is shaped so as to allow at least the partial insertion of portions of the supporting body 50 and of the annular protrusion 23 of the electric motor 115, which are opposite with respect to the portions directed toward the recess 22b.

The receptacle 22a and the recess 22b are advantageously provided at a second end portion 112 of the active portion 12, which is opposite from the end portion in which the elongated handle 13 is inserted.

The transmission shaft 26 protrudes from the motor 115, along its first axis of rotation 100, and is adapted to be mated with kinematically with the crank element 18 so as to provide the bevel gear pair 19.

Such crank element 18 is advantageously adapted to rotate about a second axis of rotation 101, which is substantially perpendicular to the first axis of rotation 100.

More specifically, the crank element 18 comprises:
- a disk-like element 30, which comprises in turn an annular element 60 which extends circumferentially in an outer radial region thereof and an element having a circular profile 61, which has a smaller diameter than the inside diameter of the annular element 60, and is concentric and coplanar therewith;
- a first pivot 31, which extends from one side of the disk-like element 30 along the second axis of rotation 101 and is coupled to a first bearing 41;
- a second pivot 32, which extends from the other side of the disk-like element 30 along the second axis of rotation 101 and comprises a first part 33, which is eccentric with respect to the second axis of rotation 101, and a second part 34 which is coupled to a second bearing 44.

More specifically, the first bearing 41 and the second bearing 44 are fitted externally respectively onto the first pivot 31 and the second part 34 of the second pivot 32.

Furthermore, the bearing 44 is directly associated with the first half-shell 11a by means of its insertion into a second seat 45a, which is provided substantially centrally on the inner side of the first half-shell 11a.

The bearing 44 has an outside diameter that is smaller at least by a small amount than the inside diameter of the second seat 45a, which is geometrically shaped in such a manner that the bearing 44 can be inserted inside it.

The apparatus 10 comprises a supporting body 50 which encloses, at least partially, the crank element 18 and/or the motor means 15.

The supporting body 50 is geometrically shaped in such a manner as to accommodate the crank element 18 and the motor means 15 at least partially inside it.

More specifically, it comprises a first portion 51 having a substantially disk-like geometric shape with a diameter that is at least slightly larger than the diameter of the disk-like element 30, so as to be able to accommodate it internally, at least partially.

Advantageously, at a central portion thereof, the first portion 51 has a first opening 251, which is circular and concentric with respect to the perimetric profile of the first portion 51 and is adapted to be passed through, at least partially, by the second pivot 32, and from which the second pivot 32 protrudes.

The first portion 51 is adapted to act as a lid for a greasing chamber 71, as will be better explained below, which is provided substantially between the first portion 51 and the crank element 18. The second pivot 32 protrudes at least partially from the first portion 51, and is shaped as previously described.

At a radial portion 53, the first portion 51 has a hollow protrusion 54 which encloses the transmission shaft 26 partially, and with play, and reproduces substantially its geometric shape; perpendicularly to the first axis of rotation 100, the protrusion 54 faces, with an opening thereof, a second portion 55 of the supporting body 50.

The second portion 55 also has a geometric shape with dimensions substantially comparable to those of the annular protrusion 23; more specifically, the second portion 55 is adjacent to and facing the front face 125 of the annular protrusion 23 and has a through hole at the opening of the protrusion 54, so as to allow the passage of the transmission shaft 26 of the electric motor 115.

In fact, the transmission shaft 26 passes through the through hole provided on the second portion 55 and is partially accommodated inside the protrusion 54 so that it can provide the bevel gear pair 19 with the disk-like element 30.

The supporting body 50 further comprises a third portion 52, which is directly associated with the second portion 55 at one end thereof and is substantially perpendicular to it; the third portion 52 has a planar extension along a plane which is parallel to the plane of extension of the first portion 51, for which it acts as a resting abutment.

The third portion 52 has holes 152 for association with the second half-shell 11b, proximate to the second portion 55.

At a central portion thereof, on the other hand, the third portion 52 has a circular second opening 252 which is adapted to allow at least the partial accommodation of the first bearing 41, fitted externally onto the first pivot 31 which is partially protruding from the third portion 52 of the supporting body 50.

Conveniently, the first portion 51 is detachably associated with the third portion 52 of the supporting body 50.

The supporting body 50, associated with the kinematic chain 14 and with the electric motor 115, is accommodated inside the box-like body 11.

More specifically, the annular protrusion 23 and the second portion 55, which are mutually parallel and adjacent, are inserted into the receptacle 22a, while the third portion 52 is adapted to be accommodated in a third seat 56 which is provided centrally on the inner side of the second half-shell 11b.

The first portion 51 radially has a plurality of second through holes 57, which are designed to be passed through by respective screw means 157 in order to fix the first portion 51 to the second half-shell 11b.

The supporting body 50 is advantageously provided with four third through holes 57, arranged mutually at a substantially constant pitch along the outer circumference thereof.

Furthermore, conveniently, the protrusion 54 can have a respective hole 59, which defines a grease point; in more detail, the respective hole 59 is associated with a corresponding access hole 70 provided on the first half-shell 11a, through which lubricant can be injected into the greasing chamber 71 in order to reduce friction and wear between the components of the kinematic chain 14 and, in particular, between the crank element 18 and the transmission shaft 26.

Preferably, the lubricant is lubricating grease.

In the present description, the expression "directly associated" is used to mean that the bearing 44 is accommodated directly in the respective half-shell 11a.

The oscillating elements 16a and 16b are comb-shaped and comprise, conveniently and respectively, a first bracket 36a and a second bracket 36b, from which the beating rods 17 protrude; in particular, a first group of rods 17a protrudes from the first bracket 36a and a second group of rods 17b protrudes from the second bracket 36b.

These beating rods 17 lie on a plane parallel to the plane of arrangement of the brackets 36a and 36b and are arranged with orientations that can vary with respect to the direction identified by the first axis of rotation 100; this configuration allows the operator to easily insert the rods of the apparatus between the branches to be shaken and from which to cause the mature products to fall.

The first linkage element 20a and the second linkage element 20b are in and of themselves known.

Advantageously, they are mutually adjacent and are fitted externally, one over the other, onto the first part 33 with an end thereof, 40a and 40b, respectively.

The first part 33 conveniently comprises a flanged edging 133, at a portion adjacent to the element having a circular profile 61, which is adapted to act as a resting abutment for one of the two linkage elements 20a and 20b.

An opposite end 41a and 41b of each one of such linkage elements 20a and 20b is engaged, respectively, with the first bracket 36a and with the second bracket 36b; more specifically, such elements 20a and 20b are pivoted with them, in such a manner as to provide a rotary coupling that ensures the relative rotation of each one of the linkage elements 20a or 20b with respect to the respective bracket 36a or 36b.

The brackets 36a and 36b also have, respectively, third through holes 37a and 37b for their fixing to the box-like body 11; such third through holes 37a and 37b are superimposed and correspond to further through holes 38a and 38b, defined on the first half-shell 11a.

Fixing means (not shown in the figures), preferably screws, pass through both holes 37a and 38a and/or 37b and 38b and are inserted into corresponding fourth through holes 39a and 39b defined on the second half-shell 11b.

In a variation of embodiment not shown in the figures, the second pivot 32 extends along the second axis of rotation 101 astride the plane of arrangement of the disk-like element 30, in such a manner that the first part 33 is engaged with the linkages 20a and 20b at its mutually opposite sections with respect to the plane of arrangement of the disk-like element 30. In this manner, the linkage elements 20a and 20b are not fitted externally to the first part 33, one over the other, but are inserted on such first part 33 on opposite sides of the crank element 18 and at parts that protrude from the supporting body 50.

The embodiment shown in the figures and the variation just described should be understood to be technically equivalent.

The fact that the linkage elements 20a and 20b are in this manner associated with the crank element 18 makes it possible to give the oscillating elements 16a and 16b an alternating movement that is, evidently, oscillating, owing to the presence of the first part 33 which is eccentric with respect to the second axis of rotation 101.

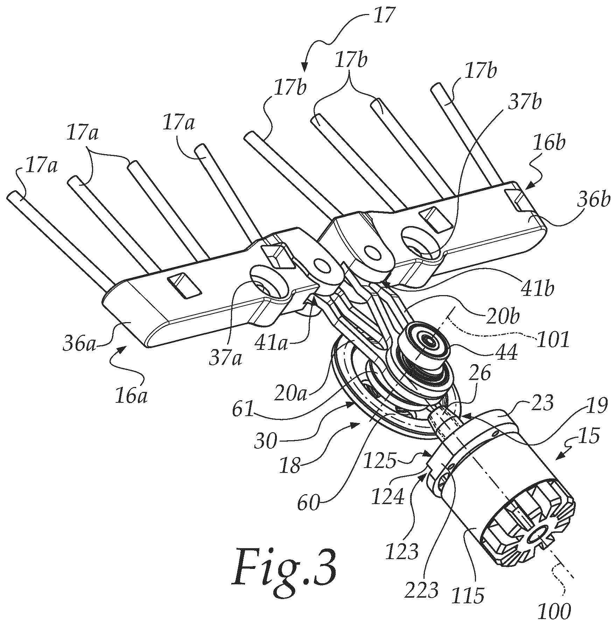

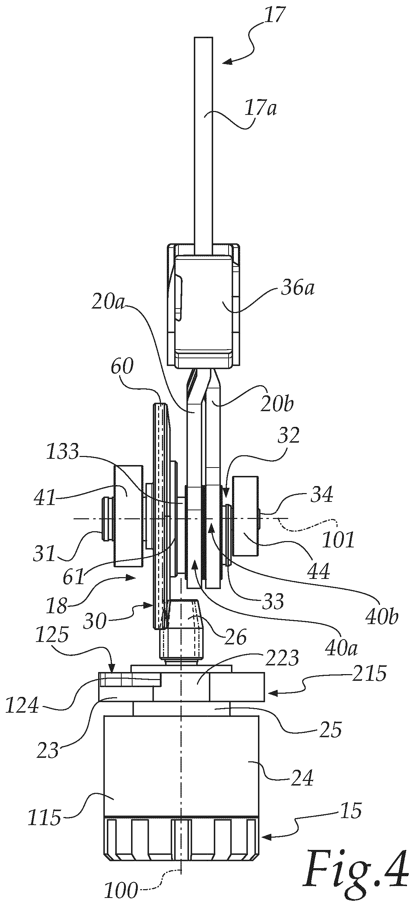

Advantageously, the crown gear of the bevel gear pair 19 is defined by the disk-like element 30 of the crank element 18, and more specifically by the annular element 60, while the pinion is defined by the transmission shaft 26 protruding from the motor means 15; the annular element 60, the transmission shaft 26 and their coupling are shown in a simplified manner in Figures 3 and 4.

In order to provide the bevel gear pair 19, the outer surfaces of the abovementioned annular element 60 and transmission shaft 26 are at least partially conical and have, conveniently, teeth, not shown in the figures; in this manner they provide, with their meshing, a gear system that transmits motion on axes that are substantially mutually perpendicular.

Advantageously, the teeth can be straight or, alternatively and preferably, the bevel gear pair 19 can be a helical bevel gear pair.

The operation of the beating apparatus according to the invention is evident from the foregoing description.

More specifically, the electric motor 115 accommodated inside the box-like body 11 transmits its rotary motion through the internal kinematic chain 14, which is partially enclosed inside the supporting body 50. The transmission shaft 26 provides a bevel gear pair 19 with the crank element 18, which is kinematically coupled with the linkage elements 20a and 20b; the oscillating motion of the latter elements, which is due to the eccentricity of the first part 33 with respect to the second axis of rotation 101 of the crank element 18, enables the alternating motion of the comb-shaped oscillating elements 16a and 16b, the beating rods 17 of which are adapted to be placed between the branches to be shaken.

In practice it has been found that the beating apparatus, particularly for beating olives and the like, according to the present invention, achieves the set aim and also the set objects.

In fact, the bevel gear pair provided by the transmission shaft and by the crank element makes it possible to considerably reduce the complexity of the kinematic chain inside the box-like body that transmits motion to the oscillating elements, in conventional apparatuses.

An advantage of the invention is therefore a greater simplicity from the viewpoints of construction and structure of the beating apparatus.

Another advantage of the invention consists in providing a beating apparatus that weighs less and is easier to handle with respect to similar, conventional apparatuses.

Another advantage of the invention consists in that a simpler kinematic chain is less subject to wear and facilitates interventions on the apparatus if internal mechanical parts need to be replaced.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102024000010684 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A beating apparatus (10), particularly for beating olives and the like, comprising a box-like body (11) provided, at an active portion (12), with an elongated handle (13), said apparatus (10) comprising a kinematic chain (14) inside said box-like body (11) for transmitting the rotary motion of motor means (15) to at least one oscillating element (16a, 16b) provided with beating rods (17), said kinematic chain (14) comprising at least one linkage element (20a, 20b) articulated at one end to said at least one oscillating element (16a, 16b) and at the other end to a crank element (18),
**characterized in that** said crank element (18) is kinematically connected to said motor means (15) by means of a bevel gear pair (19).

2. The apparatus (10) according to claim 1, **characterized in that** it comprises a supporting body (50) which encloses, at least partially, said crank element (18) and/or said motor means (15).

3. The apparatus (10) according to claim 1, **characterized in that** said box-like body (11) comprises two half-shells (11a, 11b), respectively, a first half-shell (11a) and a second half-shell (11b), which are configured to be associated detachably by virtue of connecting means.

4. The apparatus (10) according to claim 1, **characterized in that** it comprises two oscillating elements (16a, 16b), respectively, a first oscillating element (16a) which is articulated to a first linkage element (20a) and a second oscillating element (16b) which is articulated to a second linkage element (20b), said linkage elements (20a, 20b) being articulated to a common crank element (18).

5. The apparatus (10) according to one or more of the preceding claims, **characterized in that** said first half-shell (11a) and said second half-shell (11b) are geometrically shaped to provide a shape mating with said motor means (15) and with said supporting body (50).

6. The apparatus (10) according to claim 5, **characterized in that** said motor means (15) comprise an electric motor (115) having a body which substantially defines a first part (24) and a second part (25) which is contiguous to said first part (24) and radially narrowed with respect to it, said second part (25) being defined at a first end portion (215) of said electric motor (115).

7. The apparatus (10) according to one or more of the preceding claims, **characterized in that** said box-like body (11) has a first seat (22) defined by a receptacle (22a) and by a recess (22b), said receptacle (22a) being defined on said second half-shell (11b) and said recess (22b) being defined on an internal element (29) of said first half-shell (11a) which is adapted to face said supporting body (50), said recess (22b) reproducing in negative form and at least partially the geometric shape of said supporting body (50) and said receptacle (22a) being shaped so as to allow at least the partial insertion of portions of said supporting body (50) and of an annular protrusion (23) of said motor means (15) which are opposite with respect to the portions directed toward said recess (22b).

8. The apparatus (10) according to one or more of the preceding claims, **characterized in that** said annular protrusion (23) is defined at said first end portion (215) and is geometrically associated with said first seat (22) provided in the box-like body (11), said annular protrusion (23) having an outside diameter that is dimensionally comparable and substantially equal to said first part (24) and having a transverse recess (123) which defines a step (124) on a front face (125) thereof.

9. The apparatus (10) according to claim 1, **characterized in that** said crank element (18) is adapted to rotate about a second axis of rotation (101) which is substantially perpendicular to a first axis of rotation (100) of said motor means (15) and comprises:
- a disk-like element (30),
- a first pivot (31), which extends from one side of said disk-like element (30) along said second axis of rotation (101) and is coupled to a first bearing (41),
- a second pivot (32), which extends from the other side of said disk-like element (30) along said second axis of rotation (101), said second pivot (32) comprising a first part (33) which is eccentric with respect to said second axis of rotation (101) and a second part (34) which is coupled to a second bearing (44).

10. The apparatus (10) according to one or more of the preceding claims, **characterized in that** the crown gear of said bevel gear pair (19) is defined by an annular element (60) of said disk-like element (30) and a pinion of said bevel gear pair (19) is defined by said transmission shaft (26) which protrudes from said motor means (15).

11. The apparatus (10) according to one or more of the preceding claims, **characterized in that** said first linkage element (20a) and said second linkage element (20b) are fitted externally onto said first part (33).

12. The apparatus (10) according to one or more of the preceding claims, **characterized in that** said supporting body (50) is geometrically shaped in such a manner as to accommodate said crank element (18) and said motor means (15) at least partially within it, said supporting body (50) comprising a first portion (51) having a substantially disk-like geometric shape with a diameter that is at least slightly larger than the diameter of said disk-like element (30), so as to be able to accommodate said disk-like element (30) internally, said first portion (51) having a first opening (251) adapted to be passed through by said second pivot (32), at least partially, and_said second pivot (32) protruding from said first portion (51).

13. The apparatus (10) according to one or more of the preceding claims, **characterized in that** at a radial portion (53) the first portion (51) has a hollow protrusion (54) which encloses said transmission shaft (26) partially, and with play, said protrusion (54) substantially reproducing the geometric shape of said transmission shaft (26) and facing, with an opening thereof, a second portion (55) of said supporting body (50).

14. The apparatus (10) according to one or more of the preceding claims, **characterized in that** said second portion (55) has a geometric shape with dimensions substantially comparable to those of said annular protrusion (23), said second portion (55) being adjacent to and facing said front face (125) of said annular protrusion (23) and having a through hole at said opening of said protrusion (54) which is adapted to allow the passage of said transmission shaft (26) partially accommodated inside said protrusion (54), so as to provide said bevel gear pair (19) with said disk-like element (30).

15. The apparatus (10) according to one or more of the preceding claims, **characterized in that** said supporting body (50) comprises a third portion (52) which is directly associated with said second portion (55) at one end thereof and is substantially perpendicular thereto, said third portion (52) having a planar extension along a plane which is parallel to the plane of extension of said first portion (51) for which it acts as a resting abutment, said third portion (52) having holes (152) for association with said second half-shell (11b) proximate to said second portion (55) and having a second opening (252) at a central portion thereof, which is adapted to allow at least the partial accommodation of said first bearing (41).

16. The apparatus (10) according to one or more of the preceding claims, **characterized in that** said annular protrusion (23) and said second portion (55) are adapted to be inserted partially into said receptacle (22a) and **in that** said third portion (52) is adapted to be accommodated in a third seat (56) which is provided centrally on the inner side of said second half-shell (11b).

17. The apparatus (10) according to one or more of the preceding claims, **characterized in that** said bevel gear pair (19) is a helical bevel gear pair.
